## Europäisches Patentamt

## European Patent Office

## Office européen des brevets

(19)

(11) Veröffentlichungsnummer : **0 095 681**
**B1**

(12)

# EUROPÄISCHE PATENTSCHRIFT

(45) Veröffentlichungstag der Patentschrift :
21.01.87

(21) Anmeldenummer : 83105017.4

(22) Anmeldetag : 20.05.83

(51) Int. Cl.⁴ : **A 01 F 15/14**

(54) **Rundballenpresse.**

(30) Priorität : 28.05.82 US 382890

(43) Veröffentlichungstag der Anmeldung :
07.12.83 Patentblatt 83/49

(45) Bekanntmachung des Hinweises auf die Patenterteilung : 21.01.87 Patentblatt 87/04

(84) Benannte Vertragsstaaten :
DE FR GB IT NL SE

(56) Entgegenhaltungen :
EP-A- 0 075 252
FR-A- 2 397 144
FR-A- 2 414 295
GB-A- 1 385 847
US-A- 4 150 614
US-A- 4 167 844

(73) Patentinhaber : DEERE & COMPANY
1 John Deere Road
Moline Illinois 61265 (US)

(72) Erfinder : Koning, Richard William
411 Elmdale
Ottumwa Iowa 52501 (US)

(74) Vertreter : Feldmann, Bernhard et al
DEERE & COMPANY European Office, Patent Department Steubenstrasse 36-42 Postfach 503
D-6800 Mannheim 1 (DE)

## Beschreibung

Die Erfindung bezieht sich auf eine Rundballenpresse zum Formen von zylindrischen Ballen mit einem eine Einlaßöffnung aufweisenden Ballenpressraum und einer Bindevorrichtung, die bei Erreichen eines vorbestimmten Ballendurchmessers selbsttätig ausgelöst wird und einen beim Binden vor der Einlaßöffnung über einen hydraulisch betätigbaren Zylinder bewegbaren Bindearm zum Einspeisen von Bindematerial in den Ballenpressraum aufweist, wobei der Zylinder über eine antreibbare Pumpe druckbeaufschlagbar ist.

Bei dieser bekannten Rundballenpresse (US-A-4 150 614) wird die Pumpe zum Betätigen des Bindearms immer angetrieben, wodurch das hydraulische System, das in der Regel auf dem die Rundballenpresse ziehenden Fahrzeug installiert ist, ständig belastet ist und damit entsprechend ausgelegt werden muß. Die Betätigung des hydraulischen Zylinders erfolgt über ein äußerst aufwendiges Steuergestänge.

In der EP-A-0 075 252, die nur hinsichtlich der Neuheit zu berücksichtigen ist, wurde bereits dargelegt, daß der Antrieb der Pumpe selbsttätig bei Erreichen eines vorbestimmten Ballendurchmessers eingeschaltet wird, und daß der vorbestimmte Ballendurchmesser über ein Steuergestänge einstellbar ist.

Die US-A-4 167 844 offenbart bereits eine automatische Bindevorrichtung, die bei Erreichen eines bestimmten Ballendurchmessers, der in Grenzen einstellbar ist, selbsttätig oder von Hand in Gang gesetzt wird. Ein über einen hydraulisch beaufschlagbaren Zylinder bewegbarer Bindearm ist nicht vorgesehen.

Die mit der Erfindung zu lösende Aufgabe wird darin gesehen, bei einer Rundballenpresse der eingangs genannten Art, das automatische Einschalten der Bindevorrichtung in einfacher Weise zu ermöglichen, wobei Vorkehrungen möglich sind, daß der Bindevorgang auch bei Ballen mit unterschiedlichen Druchmessern ausgelöst werden kann.

Diese Aufgabe ist nach der Erfindung dadurch gelöst worden, daß der Antrieb der Pumpe bei Erreichen des vorbestimmten Ballendurchmessers sowohl selbsttätig als auch von Hand einschaltbar ist. Auf diese Weise wird die Pumpe nur bei dem Bindevorgang angetrieben, und die Handsteuerung ist betätigbar, bevor die automatische Bindevorrichtung ausgelöst wird. Dadurch können kleinere Ballendurchmesser gewickelt werden als diejenigen, die durch die selbsttätige Bindevorrichtung vorgesehen sind. Darüber hinaus wird ermöglicht, daß nach dem Wickeln bei automatisch ausgelöster Bindevorrichtung ein zusätzlicher Bindevorgang möglich ist. Für eine derartige Rundballenpresse ist nach der Erfindung vorgesehen, daß der vorbestimmte Ballendurchmesser über ein Steuergestänge einstellbar ist.

Die Merkmale der übrigen Unteransprüche beinhalten zweckmäßige Ausgestaltungen der Erfindung.

In der Zeichnung ist ein nachfolgend näher erläutertes Ausführungsbeispiel der Erfindung dargestellt. Es zeigt

Figur 1 eine Rundballenpresse in Seitenansicht,

Figur 2 den Gutaufnahmebereich der Rundballenpresse nach Fig. 1 mit eingeführtem Bindematerial,

Figur 3 einen Schnitt nach der Linie 3-3 in Fig. 1,

Figur 4 eine Anordnung für die Wickelsteuerung,

Figur 4a einen Schnitt nach der Linie 4a-4a in Fig. 4,

Figur 5 die Anordnung nach Fig. 4 in perspektivischer und teilweise in auseinandergezogener Darstellung und

Figur 6 eine schematische Darstellung des Wickelmechanismusses.

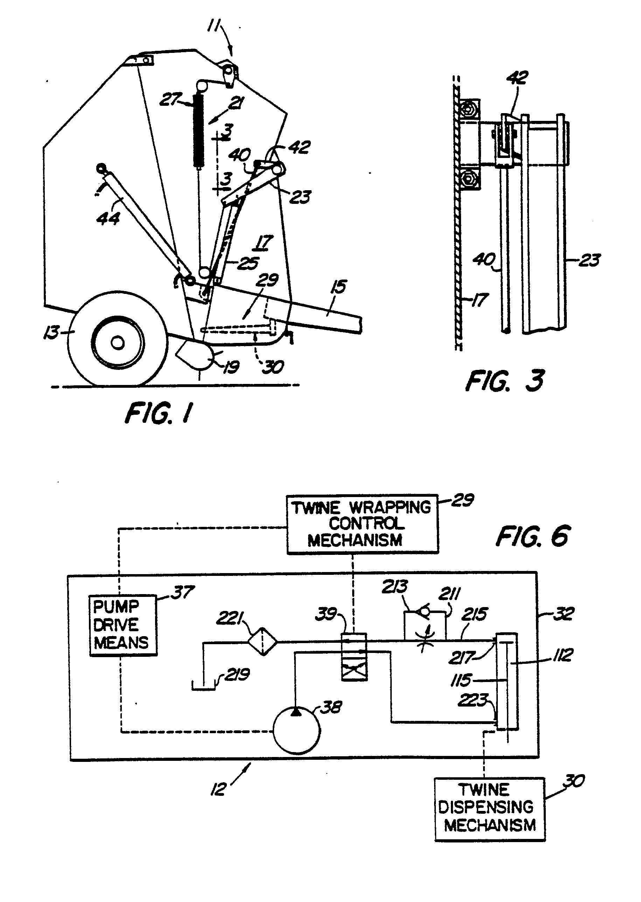

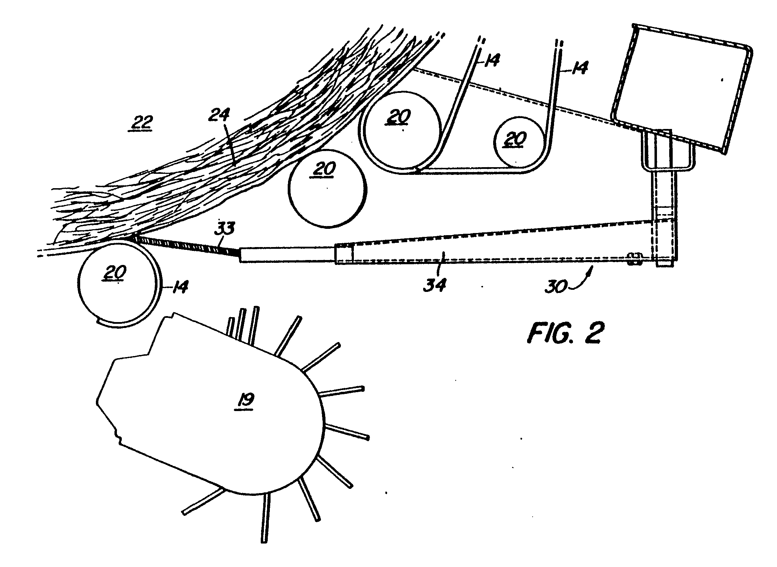

In Fig. 1 ist eine Rundballenpresse für Großballen mit 11 und in Fig. 6 ein selbsttätig arbeitender Wickelmechanismus mit 12 bezeichnet. Im einzelnen ist die Rundballenpresse in Fig. 1 ebenso wie ihr Gutaufnahmebereich in Fig. 2 vereinfacht dargestellt und weist Laufräder 13 auf, von denen in der Zeichnung nur das mit Bezug auf die Fahrtrichtung rechts angeordnete zu erkennen ist. Über eine Deichsel 15 kann die Rundballenpresse 11 an einen nicht dargestellten Ackerschlepper angehängt werden, von dem sie über eine Zapfwelle aus angetrieben wird. Zum Formen der Großballen 24 dienen Riemen 14, die von Querrollen 20 (einige sind in Fig. 2 angedeutet) geführt werden. Letztere wiederum sind zwischen Seitenwänden 17 der Rundballenpresse vorgesehen, und ihre Anordnung und ihr Zusammenwirken mit den Riemen ist in der EP-A-0 076-537, die die Priorität der US-Anmeldung mit dem Aktenzeichen 285 178 beansprucht, beschrieben. Die Bezugnahme auf diese Anmeldung erfolgt lediglich, um die Gesamtanordnung, in der der automatische Wickelmechanismus Anwendung finden kann, aufzuzeigen.

Der Gutaufnahmebereich nach Fig. 2 läßt eine herkömmliche Aufnehmevorrichtung 19 in Form einer sogenannten pick-up unterhalb der Seitenwände 17 erkennen, über die das zu pressende Gut, wie Heu, Stroh etc., vom Boden aufgenommen und einem Ballenpressraum 22 zugeführt wird. In diesem wird das Gut zu einem Großballen gerollt, dessen Größe und Dichte mit zunehmendem Durchmesser von einer Spanneinrichtung gesteuert wird. Eine entsprechende Spanneinrichtung ist in der EP-A-0 076 502 beschrieben und weist zwei Stellhebel 23 auf, von denen in der Zeichnung nur einer an der Außenseite einer Seitenwand 17 dargestellt ist und die über zwei hydraulisch betätigbare Stellzylinder 25 und zwei Federeinheiten 27 beaufschlagbar sind. Sobald ein Ballen 24 in seinem Durchmesser wächst, werden die Stellhebel 23 im Uhrzeigerdrehsinn gegen die Wirkung der Federeinheiten 27 und der Stellzylinder 25 verschwenken. Hat der Ballen dann eine vorgegebene Größe bzw. seinen endgültigen Umfang erreicht, wird der Wickelmechanismus 12 selbsttätig in Gang gesetzt und die Mantelfläche des Ballens 24 mit Band, Draht oder Folie usw. umwickelt.

Wie im einzelnen am besten aus Fig. 6 hervorgeht, ist der Wickelmechanismus 12 mit einem Bindegarnspender 30 zum Einspeisen von Bindegarn 33 in den Ballenpressraum 22, einer hydraulisch betätigbaren Antriebsvorrichtung 32 zum Hin- und Herschwenken eines in Fig. 2 dargestellten Bindearms 34 des Bindegarnspenders vorne vor dem Ballenpressraum und mit einer Wickelsteuerung 29 versehen, die in den Figuren 3 bis 5 wiedergegeben ist und einen Wickelzyklus dadurch einleitet, daß das Anwachsen eines Ballens 24 auf einen vorherbestimmten Durchmesser überwacht wird, eine Pumpe 38 eingeschaltet bzw. ihr Pumpenantrieb 37 automatisch betätigt wird und ein Zweiwegsteuerventil 39 in eine erste Stellung verstellbar ist. Der Wickelzyklus wird automatisch wieder beendet, nachdem die Mantelfläche des Ballens 24 mit Garn umwickelt ist und dann der Pumpenantrieb 37 ausgeschaltet wird. Nach Beendigung des Wickelvorgangs wird das Bindegarn selbsttätig abgeschnitten, wie es in der EP-A-0 075 252 ausgeführt ist. Danach betätigt die Bedienungsperson eine in der Zeichnung nicht dargestellte Auswurfvorrichtung, die über hydraulisch betätigbare Zylinder 44 (Fig. 1) den Ballenpressraum 22 derart öffnet, daß der Ballen 24 nach rückwärts auf den Boden rollen kann. Danach kann wieder ein Ballen im Ballenpressraum gebildet werden.

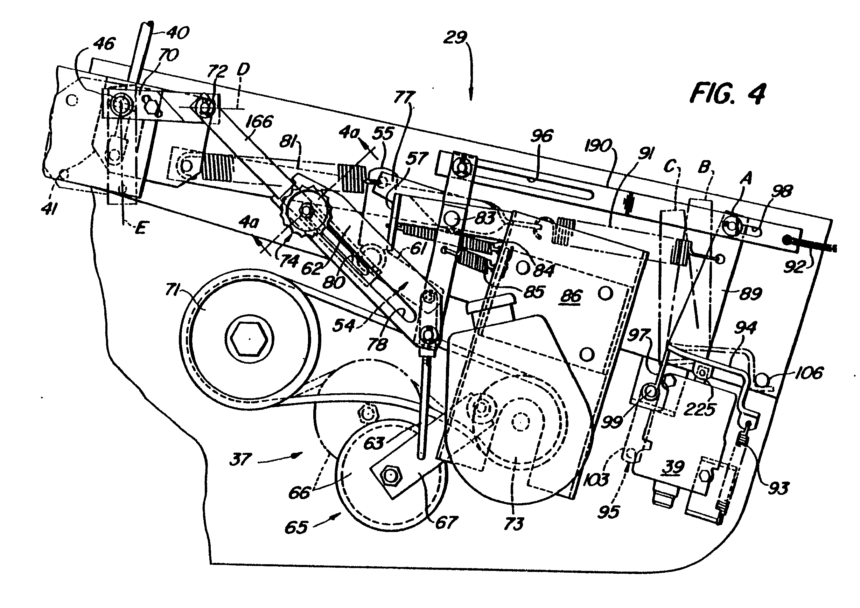

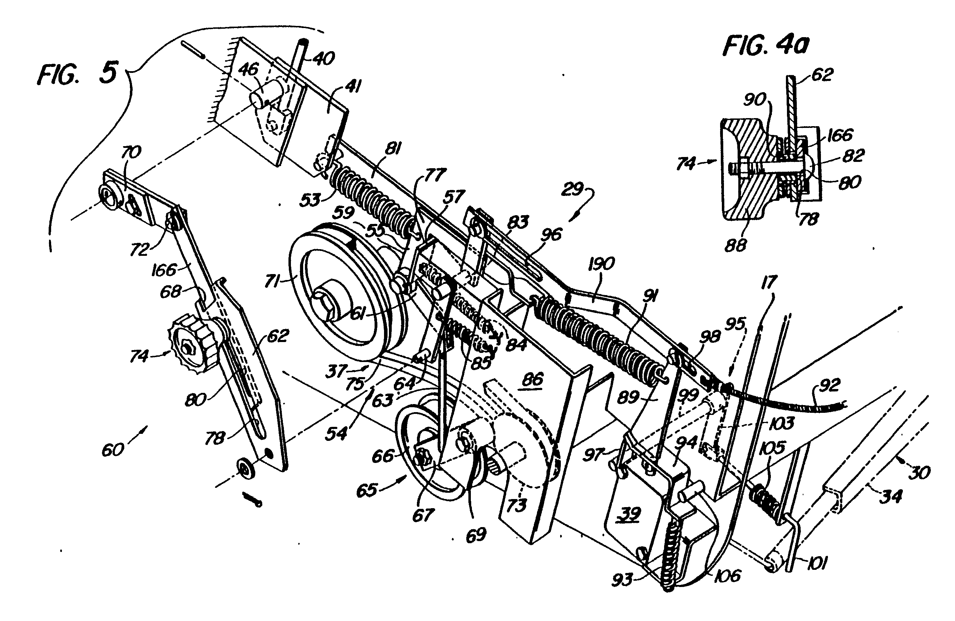

Aus den Figuren 1 und 3 bis 5 ist zu entnehmen, daß die Wickelsteuerung 29 mit einer Abtaststange 40 versehen ist, die zwischen einem der Stellhebel 23 und einem Übertragungsgestänge in Form eines Kniehebels 41 oder dergleichen vorgesehen und am Stellarm 23 über einen am Stellarm fest angeordneten Ausleger 42 angelenkt ist. Aus den Figuren 4 und 5 ist zu erkennen, daß die Abtaststange an einem Ende des Kniehebels 41 angreift, der auf einem Zapfen 46 gelagert ist, und diesen somit im Uhrzeigerdrehsinn aus der in Fig. 4 mit D bezeichneten Position in die dort mit E bezeichnete Stellung verschwenken kann. Hierbei entspricht die Position D einer Stellung, in der der Ballenpressraum noch leer ist oder ein dort befindlicher Ballen seinen vorherbestimmten Durchmesser noch nicht erreicht hat, während die Position E einer Stellung entspricht, in der der Ballen seinen vorherbestimmten Durchmesser aufweist. In der Position E befindet sich die Abtaststange mit Bezug auf Fig. 1 oben rechts, d. h. in einer Stellung, in der der Wickelzyklus eingeleitet wird. Die Stellung E ist repräsentativ für eine Vielzahl von Stellungen, in die der Kniehebel 41 aus der Position D verschwenkt werden kann. Jede Stellung E entspricht einem bestimmten Durchmesser des Ballens, so daß die genaue Stellung der Position E dem Ballendurchmesser proportional ist.

Durch die Bewegung des Kniehebels 41 in die Stellung E wird das Einschalten der Pumpe 38 der Antriebsvorrichtung 32 über den Pumpenantrieb 37 bewirkt. Hierzu ist der Kniehebel 41 mit dem einen Ende einer Feder 53 verbunden, deren anderes Ende an einer Leerlaufeinrichtung 65 für den Pumpenantrieb 37 über ein Steuergestänge in Form eines Leerlaufgestänges 54 angreift. Das Leerlaufgestänge 54 ist zwischen einer Einschalt- und einer Ausschaltstellung verstellbar und besteht im einzelnen aus einem Kniehebel 59, dessen einer Schenkel 55 mit der Feder 53 verbunden ist, einen Flansch 57 aufweist und dessen anderer Schenkel 61 an einer Stange 63 angelenkt ist, die wiederum die Verbindung mit der Leerlaufeinrichtung 65 herstellt. Letztere wird aus einer Leitrolle 66 und einem diese lagernden Schwenkarm 67 gebildet, der an einem Zapfen 69 angelenkt ist.

Der Pumpenantrieb 37 ist des weiteren noch mit einer treibenden Scheibe 71 versehen, die von der nicht dargestellten Zapfwelle des Ackerschleppers aus angetrieben wird, und mit einer getriebenen Scheibe 73, die mit der treibenden Scheibe 71 über einen Riemen 75 verbunden ist.

Das Einrücken des Pumpenantriebes 37 ist genau gesteuert und erfolgt nur, nachdem der Ballen 24 einen vorherbestimmten Durchmesser erreicht hat. Im einzelnen muß hierzu eine Klinke 77 gelöst werden, die im ausgerückten Zustand des Pumpenantriebes 37 den Flansch 57 des Kniehebels 59 übergreift und damit den Kniehebel in einer ersten Stellung arretiert, die dem leeren Ballenpressraum entspricht oder einem Zustand, in dem der Ballen seinen vorherbestimmten Durchmesser noch nicht erreicht hat.

Die Stellung der Klinke 77 wird über ein Steuergestänge 60 bestimmt, das sowohl an der Klinke als auch an dem Übertragungsgestänge 41 angreift. Das Steuergestänge 60 ist längenveränderbar ausgebildet und auf verschiedene Längenpositionen einstellbar, wodurch ab dem Erreichen des vorherbestimmten Durchmessers oder auch danach bzw. gegebenenfalls vorher die Klinke 77 entsperrt und ein Wickelvorgang ausgelöst wird.

Das Steuergestänge 60 ist hierzu zweckmäßig mit einer Winkelplatte 62 ausgerüstet, die an einem nach unten weisenden Schenkel der Klinke 77, die somit kniehebelartig ausgebildet und an der Seitenwand 17 gelagert ist, über einen Zapfen 64 schwenkbar angreift. Die Winkelplatte 62 ist ferner noch mit einer Öffnung 68 versehen, in der ein Flacheisenarm 166 längsverschiebbar und feststellbar ist und anderenends über einen Zapfen 72 an einem Arm 70 angelenkt ist, der über den Zapfen 46 mit dem Übertragungsgestänge 41 verbunden ist, so daß der Flacheisenarm in Abhängigkeit von der Verstellung des Übertragungsgestänges 41 mitbewegt wird. Eine Verbindungsvorrichtung 74 hält den Flacheisenarm 166 und die Winkelplatte 62 verschiebbar zusammen. Hierzu sind in die Winkelplatte 62 und den Flacheisenarm 166 Langlöcher 78 und 80 eingearbeitet, die damit die maximale Länge des Steuergestänges 60 bestimmen, wie nachfolgend noch näher erläutert wird.

Die Verbindungsvorrichtung 74 ist in Fig. 4a dargestellt und weist im einzelnen eine Schraube 82 auf, die durch die Langlöcher 78 und 80 gesteckt ist, sowie einen Einstellknopf 88, in dem die Schraube 82 befestigt ist. Ferner ist noch eine Hülse 90 vorgesehen, die dazu dient, den Flacheisenarm 166 zwischen dem Kopf der Schraube 82 und der Hülse festzusetzen, wodurch im angezogenen Zustand die Verbindungsvorrichtung 74 mit dem Flacheisenarm 166, nachdem der Einstellknopf 88 angezogen wurde, eine feste Einheit bildet. In diesem Zustand bleibt die Winkelplatte 62 mit Bezug auf den Flacheisenarm 166 innerhalb der Grenzen, die durch die Position des Einstellknopfes und des Langloches 78 gegeben sind, verschiebbar. Je kürzer die voll ausgezogene maximale Länge von Flacheisenarm 166 und Winkelplatte 62 ist, um so kleiner ist der erforderliche Drehwinkel für das Übertragungsgestänge 41, um die Klinke 77 zu entsperren. Umgekehrt ist, je größer die kombinierte Länge von Flacheisenarm 166 und Winkelplatte 62 ist, der erforderliche Drehwinkel des Übertragungsgestänges 41 um so größer, um die Klinke 77 zu entsperren. Ein kleiner Drehwinkel des Übertragungsgestänges 41 entspricht somit einem kleinen Ballendurchmesser, und ein großer Drehwinkel entspricht einem größeren Ballendurchmesser.

Über einen Zapfen 83 ist die Klinke 77 an der Seitenwand schwenkbar gelagert und kann in ihre Sperrstellung über eine Rückführfeder 85 geschwenkt werden. Wird nun das Übertragungsgestänge 41 im Uhrzeigerdrehsinn in die Position E verschwenkt, in der der Ballen in dem Ballenpressraum einen vorherbestimmten Durchmesser aufweist, dann wird die Feder 53 gespannt und gleichzeitig wird das Steuergestänge 60 mit Bezug auf Fig. 4 nach links oder mit Bezug auf die Rundballenpresse nach rückwärts geschwenkt. Bei dieser Bewegung des Steuergestänges 60 wird der Einstellknopf 88 letztlich gegen das Ende des Langloches 78 zur Anlage kommen, wodurch die Klinke 77 veranlaßt wird, im Uhrzeigerdrehsinn um den Zapfen 83 zu verschwenken, wobei der Kniehebel 59 freigegeben wird, und infolge der gespannten Feder 53 entgegen dem Uhrzeigerdrehsinn verschwenken kann. Bei dieser Schwenkbewegung des Kniehebels 59 entgegen dem Uhrzeigerdrehsinn wird die Leerlaufeinrichtung 65 betätigt, und die Leitrolle 66 wird derart im Uhrzeigerdrehsinn verschwenkt, daß sie gegen den Riemen 75 zur Anlage kommt, diesen spannt, wodurch eine Antriebsverbindung zwischen der treibenden Scheibe 71 und der getriebenen Scheibe 73 hergestellt ist, und dadurch die Pumpe 38 angetrieben wird.

Am Ende des Wickelzyklusses wird eine Rückholfeder 84, die zwischen einem Rahmenteil 86 und dem Flansch 57 vorgesehen ist, das Leerlaufgestänge 54 wieder in seine Ausrückstellung verschwenken, sofern die Rückholfeder 84 in der Lage ist, die Kraft der Feder 53 zu überwinden. Sobald die Leerlaufeinrichtung 65 in ihre in Fig. 5 dargestellte ausgerückte Stellung verschwenkt, wird auch der Kniehebel 59 in seine Ausrückstellung zurückgeführt und kann wieder über die Klinke 77 gesperrt werden.

Die in Fig. 4 dargestellte Wickelsteuerung 29 ermöglicht ferner auch noch die Betätigung des Zweiwegsteuerventils 39 dadurch, daß sie an einem Ventilstellhebel 89 angreift, der zwischen drei Ventilstellungen verstellbar ist, und zwar einer Position A, die der Ruhestellung entspricht, in der sich der Ventilstellhebel 89 in einer Position befindet, in der kein Wickelzyklus stattfindet, einer Position B, in der der Bindearm 34 von der linken Seite der Rundballenpresse zu deren rechten Seite verschwenkt wird, und einer Position C, in der der Bindearm 34 von der rechten Seite wieder zurück zur linken Seite verschwenkt wird. Befindet sich der Ventilstellhebel 89 in den Positionen A und C, dann nimmt das Zweiwegsteuerventil 39 die in Fig. 6 wiedergegebene Stellung ein. Wird der Ventilstellhebel 89 in die Position B verschoben, dann wird das Zweiwegsteuerventil 39 sich in seiner zweiten in Fig. 6 nicht dargestellten Position befinden, in der die unteren Verbindungskanäle des Zweiwegsteuerventils 39 in den hydraulischen Kreislauf nach Fig. 6 einbezogen sind. Unter erneuter Bezugnahme auf Fig. 5 ist auszuführen, daß die Winkelsteuerung 29 des weiteren mit einer Ventilstellhebelfeder 91 versehen ist, die über einen Arm 81 mit dem Übertragungsgestänge 41 verbunden ist und anderenends an dem Ventilstellhebel 89 angreift, wodurch letzterer in die Positionen B und C in Abhängigkeit von der Schwenkbewegung des Übertragungsgestänges 41 bzw. von der Fertigstellung eines Ballens in dem Ballenpressraum 22 gezogen wird. Eine Rückholfeder 93 ist mit ihrem einen Ende an den Ventilstellhebel 89 angeschlossen und zieht den Ventilstellhebel 89 in die Position A am Ende eines Wickelzyklusses, wenn die Ventilstellhebelfeder 91 wieder entspannt ist. Sobald ein Ballen mit einem vorherbestimmten Durchmesser in dem Ballenpressraum gewickelt wurde und sobald das Übertragungsgestänge 41 im Uhrzeigerdrehsinn so weit verschwenkt wurde, daß auf den Ventilstellhebel 89 über die Ventilstellhebelfeder 91 ein ausreichender Zug ausgeübt wird, der die Kraft der Rückholfeder 93 überwindet, dann wird der Ventilstellhebel 89 aus der Position A in die Position B verschwenken. In dieser Stellung wird die hydraulische Antriebsvorrichtung 32 den Bindearm 34 von der linken Maschinenseite zur rechten Maschinenseite bewegen, sofern die Klinke 77 vorher entsperrt wurde. Der Ventilstellhebel 89 wird über eine Sperre 95 daran gehindert, sich aus der Stellung B in die Stellung C zu bewegen. Die Sperre 95 weist im einzelnen eine Sperrstange 99 mit einem Finger 97 an einem Ende auf, der gegen die Unterseite des Ventilstellhebels 89 zur Anlage kommt. Die Sperre 95 ist ferner noch mit einem Betätigungsarm 101 versehen, der über einen Hebel 103 mit der Sperrstange 99 verbunden ist. Wird nun der Ventilstellhebel 89 aus seiner Position A in die Position B verschwenkt, dann wird ein Stift 225, der mit seinem einen Ende an eine untere Platte 94 des Ventilstellhebels 89 angelenkt ist und mit seinem anderen Ende mit dem Ventilschieber des Zweiwegsteuerventils 39 verbunden ist, nach außen gezogen, wobei das eine Ende der Platte 94 auf der Oberseite des Fingers 97 aufliegt und das andere Ende gegen die Unterseite eines Anschlages 106 zur Anlage kommt. Die Sperrstange 99 ist drehbar in der Seitenwand 17 gelagert und entgegen dem Uhrzeigerdrehsinn gegen die Wirkung einer Feder 105 verdrehbar, und zwar in Abhängigkeit von dem Kontakt des Betätigungsarms 101 mit dem Bindearm 34 am Ende seines Schwenkbereiches von der linken Maschinenseite zur rechten Maschinenseite. Wird nun die Sperrstange 99 entgegen dem Uhrzeigerdrehsinn verschwenkt, dann kann die Ventilstellhebelfeder 91 den Ventilstellhebel 89 in die Position C verschwenken, wodurch wiederum der Bindearm 34 von der rechten Maschinenseite zu der linken Maschinenseite zurückgeschwenkt wird. Beim Verschwenken von der Stellung B in die Stellung C wird die Platte 94 entgegen dem Uhrzeigerdrehsinn nach unten verschwenkt, wodurch der Stift 225 ebenfalls nach unten bewegt wird.

Ein Betätigungsgestänge 190 ist von Hand vom Stand der Bedienungsperson am ziehenden Ackerschlepper über ein Seil 92 verstellbar und zwischen der Klinke 77 zum Entsperren der Klinke und dem Ventilstellhebel 89 vorgesehen, um diesen, falls erforderlich, wieder in seine Position A mit einer nachfolgenden Verstellung in die Position B zu verschwenken. Das Betätigungsgestänge 190 hat zwei Aufgaben. Zunächst ermöglicht es der Bedienungsperson, den Wickelmechanismus, wann immer es ihr beliebt, zu betätigen, beispielsweise wenn der Aufsammelvorgang auf dem Feld beendet werden soll und nicht genügend Material sich im Ballenpressraum befindet, um einen vollständigen Ballen zu wickeln. In einem solchen Fall kann die Bedienungsperson den Wickelmechanismus 12 auslösen, ohne daß das Steuergestänge 60 bereits wieder die erforderliche Position einnimmt, allerdings unter der Voraussetzung, daß der Ballen in dem Ballenpressraum bereits einen solchen Durchmesser aufweist, daß die Federn 53 und die Ventilstellhebelfeder 91 ausreichend gespannt wurden, damit der Pumpenantrieb 37 eingerückt werden kann und damit der Ventilstellhebel 89 aus der Position A in die Position B verschwenkt wird. Andererseits ermöglicht es das Betätigungsgestänge 190 der Bedienungsperson, daß ein zweiter Wickelvorgang ausgelöst wird, wodurch noch zusätzliche Bindegarnschleifen um den bereits fertig gewickelten Ballen gelegt werden. Das Betätigungsgestänge 190 ist mit Langlöchern 96 und 98 versehen, die es ermöglichen, daß es mit der Klinke 77 und dem Ventilstellhebel 89 verschiebbar verbindbar ist. Andererseits sind die Langlöcher 96 und 98 derart ausgestaltet, daß eine freie Bewegung der Klinke 77 und des Ventilstellhebels 89 in und aus ihren verschiedenen Positionen während der automatischen Betätigung der Wickelsteuerung 29 möglich ist.

Im Einsatz wird, wenn das Material in den Ballenpressraum 22 eingespeist wird, der dort geformte Ballen 24 in seinem Durchmesser anwachsen. Der Umfang des Ballenpressraumes 22 wird über die Stellhebel 23 gesteuert, die im Uhrzeigerdrehsinn mit Bezug auf Fig. 1 schwenkbar gelagert sind. Beim Anwachsen des Ballens wird die Abtaststange 40 sich zusammen mit dem zugehörigen Stellhebel 23 nach oben bewegen, wodurch das Übertragungsgestänge 41 im Uhrzeigerdrehsinn aus seiner Position D in Richtung auf die Position E verschwenkt wird. Dies wiederum bewirkt ein Spannen der Feder 53 und der Ventilstellhebelfeder 91. Die Stellung E ist durch die wirksame Länge des Steuergestänges 60 bestimmt (d. h. die maximale kombinierte Länge des Flacheisenarmes 166 und der Winkelplatte 52, die durch die festgestellte Stellung der Verbindungsvorrichtung 74 in dem Langloch 80 bestimmt ist und durch den Anschlag der Hülse 90 gegen das linksseitige Ende des Langloches 80 in der Winkelplatte 62). Nachdem nun die Position E erreicht wurde, wird die Klinke 77 durch Verschwenken um den Zapfen 83 in Abhängigkeit von der Drehung des Übertragungsgestänges 41 entsperrt. Danach kann die Spannung in der Feder 53 auf das Leerlaufgestänge 54 einwirken, wodurch das Leerlaufgestänge in eine Position verschwenkt wird, in der der Pumpenantrieb 37 eingeschaltet ist. Diese Bewegung erfolgt gegen die Wirkung der Rückholfeder 84. Bei eingeschaltetem Pumpenantrieb 37 läuft die Pumpe 38, wodurch wiederum die hydraulische Antriebsvorrichtung 32 für den Bindegarnspender 30 aktiviert wird.

Bei der Spannung der Ventilstellhebelfeder 91 infolge der Bewegung des Übertragungsgestänges 41 aus der Position D in Richtung auf die Position E hin wird auch eine ausreichende Kraft auf den Ventilstellhebel 89 ausgeübt, die ausreicht, die Kraft der Rückholfeder 93 zu überwinden, wodurch der Ventilstellhebel 89 aus seiner Position A in die Position B verschwenken kann. Der Ventilstellhebel 89 nimmt die Position bereits ein, bevor die Klinke 77 entsperrt ist und den Pumpenantrieb 37 eingerückt hat. Während seiner Schwenkbewegung aus der Position A in die Position B verschwenkt der Ventilstellhebel 89 entgegen dem Uhrzeigerdrehsinn und nach oben mit Bezug auf den Stift 92, der dabei nach oben gezogen wird, wobei dann über die hydraulische Antriebsvorrichtung 32 der Bindearm 34 von der linken Maschinenseite zu der rechten Maschinenseite verschwenkt wird. Wenn der Bindearm 34 die rechte Seite der Maschine erreicht und gegen den in Fig. 5 dargestellten Betätigungsarm 101 zur Anlage kommt, um die Sperre 95 zu entsperren, dann wird der Ventilstellhebel 89 aus seiner Position B in die Position C unter der Wirkung der Ventilstellhebelfeder 91 verschwenken. Diese Bewegung wiederum bewirkt, daß der Stift 225 des Zweiwegsteuerventils 39 nach innen verschoben wird, wodurch die hydraulische Antriebsvorrichtung umgekehrt wird. In diesem Zustand kann dann der Bindearm 34 von der rechten Seite zur linken Maschinenseite verschwenken. Am Ende seines Schwenkbereiches kommt der Bindearm 34 in den Wirkungsbereich eines nicht dargestellten Schneidmechanismusses, der das Bindegarn durchtrennt. Die Bedienungsperson kann dann einen herkömmlichen Mechanismus, von dem in der Zeichnung lediglich der hydraulische Zylinder 44 angedeutet ist, betätigen, um den fertig geformten Ballen 24 aus dem Ballenpressraum 22 auszufördern. Nach dem Ausfördern werden die Stellhebel 23 wiederum entgegen dem Uhrzeigerdrehsinn zurückgestellt, wodurch ebenfalls die Abtaststange 40 nach unten verschoben wird. Wird aber die Abtaststange 40 nach unten geschoben, dann kann das Übertragungsgestänge 41 aus seiner Position E in die Position D unter der Wirkung der Feder 53, der Rückholfeder 84, der Ventilstellhebelfeder 91 und der Rückholfeder 93 zurück verschwenken. Die Rückholfeder 84 ist dabei derart ausgelegt, daß sie das Leerlaufgestänge 54 in seiner Ausschaltstellung halten kann, in der der Pumpenantrieb 37 ausgeschaltet ist, wobei dann auch der Kniehebel 59 durch die Klinke 77 gesperrt wird. Die Klinke 77 steht dabei immer unter der Wirkung der Rückführfeder 85 und wird bei dem Zurückschwenken des Kniehebels 59 einfach leicht angehoben.

Sobald das Übertragungsgestänge 41 aus der Position E in die Position D zurückgeschwenkt wird, wird die Spannung der Ventilstellhebelfeder 91 reduziert und erreicht einen Wert, der ausreicht, daß die Rückholfeder 93 den Ventilstellhebel 89 aus seiner Position C in die Position A zurück verstellt. Während dieser Bewegung bleibt die Stellung des Zweiwegsteuerventils 39 unverändert. Bei der Deaktivierung des Pumpenantriebes 37 und der Rückführung des Ventilstellhebels 89 aus der Position C in die Position A wird der Wickelzyklus beendet, und der Wickelmechanismus ist wiederum in der Lage, einen neuen Wickelzyklus zu beginnen, sobald ausreichendes Material sich im Ballenpressraum befindet.

Das Betätigungsgestänge 190 erlaubt es der Bedienungsperson, auf deren Wunsch hin die Klinke 77 zu entsperren, um den Pumpenantrieb 37 einzuschalten, unter der Voraussetzung, daß die Feder 53 ausreichend gespannt ist, um das Leerlaufgestänge 54 in die eingerückte Position zu verstellen, wodurch wiederum der Ventilstellhebel 89 aus der Position C in die Position A verstellt wird, so daß ein zweiter Wickelzyklus am selben Ballen erfolgen kann. Die geometrischen Abmessungen des Übertragungsgestänges 41, des Steuergestänges 60 und der Feder 53 sowie der Ventilstellhebelfeder 91 sind dabei derart gewählt, daß erstens bei einer Ballenpresse, die dazu ausgelegt ist, einen Ballen mit einem maximalen Durchmesser von 1,82 m zu wickeln, die Feder 93 und die Ventilstellhebelfeder 91 beim Anwachsen des Ballens auf etwa 0,91 m stark gespannt werden, zweitens beim weiteren Anwachsen des Ballens von 0,91 m Durchmesser auf 1,82 m Durchmesser die Feder 53 und die Ventilstellhebelfeder 91 nur noch geringfügig gespannt werden und drittens nur eine geringfügige, nach hinten gerichtete Bewegung des Steuergestänges 60 stattfindet, wenn der Ballen von 0 m Durchmesser auf 0,91 m Durchmesser anwächst, wobei viertens eine beträchtliche nach rückwärts gerichtete Bewegung des Steuergestänges 60 stattfindet, wenn der Durchmesser des Ballens von 0,91 m auf 1,82 m anwächst. Bei diesen geometrischen Abmessungen beträgt der mindest vorherbestimmte Durchmesser, bei dem ein Wickelzyklus automatisch oder von Hand aus geführt werden kann, 0,91 m. Bei Ballendurchmessern von weniger als 0,91 m ist die Spannung der Feder 53 nicht ausreichend, um das Leerlaufgestänge 54 in seine eingerückte Position zu verschwenken.

Die folgende Beschreibung bezieht sich auf Fig. 6, die die schematische Darstellung des Wickelmechanismusses betrifft. Sie zeigt insbesondere die hydraulische Antriebsvorrichtung 32, um den Bindearm 34 vor dem Ballenpressraum 22 hin und her zu bewegen. Die hydraulische Antriebsvorrichtung 32 weist einen doppelseitig beaufschlagbaren hydraulischen Zylinder 112, die Pumpe 38 und das Zweiwegsteuerventil 39 auf. Ein einstellbares Steuerventil 211 mit einer Bypassleitung 213 ist in einer Leitung 215 vorgesehen und verbindet einen Auslaß des Zweiwegsteuerventils 39 mit einem Basiskanal 217 des Zylinders 112. Über das Steuerventil 211 ist der Flüssigkeitsdurchfluß nach links gesteuert, während der Flüssigkeitsdurchfluß zur rechten Seite ungesteuert ist. Damit ist der Flüssigkeitsdurchfluß zum Ausfahren eines Kolbens 115 in dem Zylinder 112 ungesteuert, wohingegen der Flüssigkeitsfluß zum Einfahren des Kolbens in den Zylinder kontrolliert ist. Ein Sammelbehälter 219 ist ebenfalls mit dem Zweiwegsteuerventil 39 durch eine Filteranordnung 221 verbunden.

Fig. 6 zeigt die hydraulische Antriebsvorrichtung 32 in einem Zustand zwischen den Wickelzyklen, d. h. wenn der Ballenpressraum leer ist oder wenn der Ballenwickelvorgang sich in seiner Anfangsphase befindet. Während der Wickelzyklen befindet sich der Ventilstellhebel 89 in der Position A, wie sie in Fig. 4 gezeigt ist. In dieser Stellung wird die Pumpe 38 nicht über den Pumpenantrieb 37 angetrieben, so daß keine Flüssigkeit in einen Kanal 223 des Zylinders von der Pumpe 38 aus gelangen kann. Ist nun der Wickelvorgang abgeschlossen, d. h. wenn der Ballen seine gewünschte Größe erreicht hat, dann wird die Wickelsteuerung 29 zunächst den Ventilstellhebel 89 aus seiner Position A in die Position B verstellen, wodurch der Ventilschieber des Zweiwegsteuerventils 39 nach außen gezogen wird, wodurch eine Flüssigkeitsverbindung zwischen der Pumpe 38 und dem Basiskanal 217 über die Bypassleitung 213 erfolgt. Nach der Aktivierung des Pumpenantriebes 37 wird der Kolben 115 in dem Zylinder 112 ausgefahren, und Flüssigkeit kann aus dem Kanal 223 über das Zweiwegsteuerventil 39 und die Filteranordnung 221 in den Sammelbehälter 219 gelangen. Wird nun der Ventilstellhebel 89 aus seiner Position B in die Position C verstellt, dann wird auch der Ventilschieber des Zweiwegsteuerventils 39 nach innen verschoben, wodurch eine Flüssigkeitsverbindung zwischen der Pumpe 38 und dem Kanal 223 erfolgt, wodurch der Kolben 115 in den Zylinder 112 eingefahren wird. Während des Einfahrens tritt Druckflüssigkeit aus dem Basiskanal 217 aus und fließt durch das Steuerventil 211 zurück, das den Flüssigkeitsdurchfluß kontrolliert. Von dem Steuerventil 211 aus gelangt die Flüssigkeit durch das Zweiwegsteuerventil 39, die Filteranordnung 221 in den Sammelbehälter 219. Das Garn 33 wird durch den nicht gezeigten Garnabschneider durchtrennt, wenn sich der Kolben 115 in seiner voll eingefahrenen Position befindet. Das Umwickeln eines Ballens ist nun beendet, und der Ballen kann durch die Bedienungsperson ausgefördert werden. Nach dem Ausfördern wird die Wickelsteuerung 29 den Pumpenantrieb 37 deaktivieren und den Ventilstellhebel 89 von der Position C in die Position A zurück verstellen. Wie bereits vorstehend ausgeführt wurde, wird sich bei dieser Rückstellbewegung die Stellung des Zweiwegsteuerventils 39 nicht verändern. Damit ist auch die hydraulische Antriebsvorrichtung 32 deaktiviert, bis ein neuer Wickelzyklus beginnt.

## Patentansprüche

1. Rundballenpresse (11) zum Formen von zylindrischen Ballen (24) mit einem eine Einlaßöffnung aufweisenden Ballenpressraum (22) und einer Bindevorrichtung (12), die bei Erreichen eines vorbestimmten Ballendurchmessers selbsttätig ausgelöst wird und einen beim Binden vor der Einlaßöffnung über einen hydraulisch betätigbaren Zylinder (112) bewegbaren Bindearm (34) zum Einspeisen von Bindematerial (33) in den Ballenpressraum (22) aufweist, wobei der Zylinder (112) über eine antreibbare Pumpe (38) druckbeaufschlagbar ist, dadurch gekennzeichnet, daß der Antrieb (37) der Pumpe (38) sowohl selbsttätig bei Erreichen des vorbestimmten Ballendurchmessers als auch von Hand einschaltbar ist.

2. Rundballenpresse (11) nach Anspruch 1, dadurch gekennzeichnet, daß der vorbestimmte Ballendurchmesser über ein Steuergestänge (60) einstellbar ist.

3. Rundballenpresse nach Anspruch 1 oder 2 mit einer Klinke (77) zum Entsperren der Bindevorrichtung (12) und einem zwischen zumindest zwei Stellungen verschiebbaren Ventilschieber eines Steuerventils (39), der über einen Ventilstellhebel (89) verstellbar ist, dadurch gekennzeichnet, daß ein von Hand betätigbares Betätigungsgestänge (190) vorgesehen ist, das zur Verbindung mit der Klinke (77) und mit dem Ventilstellhebel (89) mit je einem Langloch (96, 98) versehen ist.

4. Rundballenpresse nach einem oder mehreren der vorherigen Ansprüche mit einer Klinke (77) zum Entsperren der Bindevorrichtung (12), dadurch gekennzeichnet, daß das Steuergestänge (60) mit der Klinke (77) verbunden und längenveränderbar ausgebildet ist.

5. Rundballenpresse nach Anspruch 4, dadurch gekennzeichnet, daß das Steuergestänge (60) einen Flacheisenarm (116) und eine Winkelplatte (62) aufweist, der Flacheisenarm in der Winkelplatte geführt ist, Flacheisenarm und Winkelplatte mit zueinander ausgerichteten Langlöchern (78 und 80) versehen sind und in dem Langloch (80) des Flacheisenarms eine gegen ein Ende des Langloches (78) in der Winkelplatte zur Anlage bringbare, beliebig verstellbare Verbindungsvorrichtung (74) festsetzbar ist.

## Claims

1. A round bale press (11) for forming cylindrical bales (24), comprising a baling chamber (22) having an inlet opening and a binding means (12) which is automatically triggered when a predetermined bale diameter is reached and which has a binding arm (34) for feeding binding material (33) into the baling chamber (22), the binding arm (34) being movable by way of a hydraulically operable cylinder (112) in front of the inlet opening in the binding operation, wherein the cylinder (112) can be put under pressure by way of a drivable pump (38), characterised in that the drive (37) of the pump (38) can be cut in both automatically when the predetermined bale diameter is reached and also manually.

2. A round bale press (11) according to claim 1 characterised in that the predetermined bale diameter can be adjusted by way of a control linkage (60).

3. A round bale press according to claim 1 or claim 2 with a latch (77) for releasing the binding means (12), and a valve spool, which is displaceable between at least two positions, of a control valve (39) which can be displaced by way of a valve control lever (89), characterised in that there is provided a manually operable actuating linkage (190) which is provided with a respective slot (96, 98) for connection to the latch (77) and to the valve control lever (89).

4. A round bale press according to one or more of the preceding claims including a latch (77) for releasing the binding means (12) characterised in that the control linkage (60) is connected to the latch (77) and is arranged to be variable in length.

5. A round bale press according to claim 4 characterised in that the control linkage (60) has a flat bar arm (116) and an angle plate (62), the flat bar arm is guided in the angle plate, the flat bar arm and the angle plate are provided with slots (78 and 80) which are aligned relative to each other, and a connecting means (74) which can be displaced as desired and which can be caused to bear against an end of the slot (78) in the angle plate can be fixed in the slot (80) in the flat bar arm.

**Revendications**

1. Presse à balles rondes (11) pour la formation de balles cylindriques (24), comportant une chambre (22) de formation des balles présentant un orifice d'entrée et un dispositif de liage (12) qui est déclenché automatiquement quand un diamètre de balle prédéterminé est atteint et un bras de liage (34) déplaçable lors du liage devant l'orifice d'entrée par l'intermédiaire d'un cylindre (112) pouvant être actionné hydrauliquement pour l'alimentation de la chambre (22) de formation des balles en matière de liage (33), le cylindre (112) pouvant être alimenté en pression par l'intermédiaire d'une pompe (38) pouvant être entraînée positivement, caractérisée en ce que le dispositif d'entraînement (37) de la pompe (38) peut, quand un diamètre de balle prédéterminé est atteint, être mis en service à la fois automatiquement et également à la main.

2. Presse à balles rondes (11) suivant la revendication 1, caractérisée en ce que le diamètre de balle prédéterminé est réglable par l'intermédiaire d'une tringlerie de commande (60).

3. Presse à balles rondes suivant la revendication 1 ou 2, comportant un cliquet (77) pour déverrouiller le dispositif de liage (12) et un tiroir de valve de commande (39) déplaçable en translation entre au moins deux positions et dont le déplacement peut être assuré par l'intermédiaire d'un levier de réglage de valve (89) caractérisée en ce qu'il est prévu une tringlerie d'actionnement (190) pouvant être actionnée à la main, qui est munie chaque fois d'un trou oblong (96, 98) pour sa liaison avec le cliquet (77) et avec le levier de réglage de valve (89).

4. Presse à balles rondes suivant une ou plusieurs des revendications précédentes, comportant un cliquet (77) pour déverrouiller le dispositif de liage (12), caractérisée en ce que la tringlerie de commande (60) est reliée au cliquet (77) et est agencée de façon à avoir une longueur variable.

5. Presse à balles rondes suivant la revendication 4, caractérisée en ce que la tringlerie de commande (60) comporte un bras formé par un fer plat (116) et une plaque en équerre (62), le bras formé par un fer plat étant guidé dans la plaque en équerre, ce bras formé par un fer plat et cette plaque en équerre étant muni de trous oblongs (78 et 80) alignés l'un par rapport à l'autre, et en ce qu'un dispositif de liaison (74) déplaçable à volonté et pouvant être amené contre une extrémité du trou oblong (78) prévu dans la plaque en équerre peut être immobilisé dans le trou oblong (80) du bras formé par un fer plat.

FIG. 1

FIG. 3

TWINE WRAPPING CONTROL MECHANISM — 29

FIG. 6

PUMP DRIVE MEANS — 37

TWINE DISPENSING MECHANISM — 30

1

FIG. 2

FIG. 4

FIG. 4a

FIG. 5